# EUROPEAN PATENT SPECIFICATION

(11) **EP 3 541 543 B1**
(45) Date of publication and mention of the grant of the patent: **06.01.2021**
(21) Application number: 17801673.9
(22) Date of filing: 15.11.2017
(51) Int. Cl.: B21C 37/06, B21C 37/08, G01L 5/00, B21C 37/15, E21B 43/01, F16L 9/02, H01B 7/04

(54) **METHOD FOR MANUFACTURING A SYSTEM**
VERFAHREN ZUR HERSTELLUNG EINES SYSTEMS
PROCÉDÉ POUR LA FABRICATION D'UN SYSTÈME

(30) Priority: 16.11.2016 EP 16199045
(43) Date of publication of application: 25.09.2019
(73) Proprietor: Sandvik Intellectual Property AB, 811 81 Sandviken (SE)
(72) Inventor: HEDBLOM, Erika, SE-818 32 Valbo (SE)
(86) International application number: PCT/EP2017/079348
(87) International publication number: WO 2018/091543

(56) References cited:
- DE-A1- 2 507 649
- DE-C1- 4 039 863
- GB-A- 2 495 850
- JP-A- S5 954 418
- JP-A- S59 191 517
- US-B1- 6 935 376

## Description

### TECHNICAL FIELD

The present disclosure relates to a system comprising at least one signal line and at least one sensor connected to the at least one signal line and a tube formed of a metal strip or a metal plate having two longitudinal edges extending in a longitudinal direction and two transverse edges connecting the longitudinal edges.

The present disclosure furthermore relates to a method for manufacturing such a system.

### BACKGROUND

Tubes of metal, in particular of steel or stainless steel, are used in a plurality of applications, wherein the tubes are subject to multiple loads, wear and aging. These factors may for example lead to pipe bursts, which not only lead to a replacement of the respective tube, but is also associated with a downtime of machinery connected by the tube. To avoid pipe bursts, some tubes of metal are replaced by following a predefined time schedule and irrespectively of the actual state of the tube. Taking into account the actual state of the tube would be beneficial, but up to now it is rather difficult to determine the actual state of a metal tube during its operation.

Sensors and signal lines, which can be used to determine or transfer data, e.g. on the actual state of the metal tube, respectively, are having a short durability when being placed on the outside of the tube due to environmental influences. Placing a sensor and/or a signal line in the cavity of a tube is rather difficult, if not impossible, due to the length of the metal tube or may not be beneficial either as any fluid transferred within the tube shortens the durability of the sensor and/or the signal line placed in the cavity.

US-B1-6 935 376 relates to the manufacture of a double wall pipe with integrated signal line and contains the steps of providing an inner grooved tube, into which the signal line is placed, prior to forming the double pipe.

### SUMMARY

It is an aspect of the present invention to solve or at least reduce the above-mentioned difficulties. The present invention therefore relates to a system, in which information on the state of a tube of metal can be transferred along the entire length of the metal tube without exposing the means for transferring the information to an excessive wear or environmental influences. Further, the present invention targets a considerably long system, such as more 50 meters, such as more than 100 meters, for transmitting a signal and/or for measuring parameters of a tube. Thus, the possibility is given to monitor the movements and stresses that a long tube is exposed to. To this effect, the present invention also provides a method for manufacturing such a system, which method will provide the possibility to precisely mount and arrange the at least one signal line and the at least one sensor.

At least one aspect underlying the present invention is addressed by a system comprising at least one signal line, at least one sensor connected to the at least one signal line, a tube formed of a metal strip or a metal plate having two longitudinal edges extending in a longitudinal direction and two transverse edges connecting the longitudinal edges, wherein the metal strip or metal plate is formed to a cavity by joining the longitudinal edges of the metal strip or metal plate together, and wherein the at least one signal line with the at least one sensor is located in the cavity. According to one embodiment, the tube is formed from a metal strip.

In terms of the present invention, a signal line is a line capable and configured to transfer data from a transmitter to a receiver. In an embodiment, the at least one signal line is chosen from a line for an electrical signal, a line for an electromagnetic signal and a line for an optical signal or any combination thereof. An example for a signal line is an isolated electrically conducting wire or an optical glass fibre, further examples of a signal line is a coaxial cable or a twisted pair cable which provides signal lines which are more immune for electrical noise. Since the system can be used to transfer signals along the signal line and thus along the tube, the system can be denoted a signal transmission system. The at least one sensor is capable of detecting a certain physical or chemical parameter, such as a temperature, a force, a pressure, a translational and/or rotational movement, and a change in length of the signal line or its associated metal tube. In an embodiment, the sensor is chosen from a group consisting of a temperature sensor, a force sensor, a pressure sensor, an acceleration sensor, a gyroscope, a strain gauge, a conductivity sensor and a hygrometer or any combination thereof. A combined sensor is capable of determining one or more of the aforementioned physical or chemical parameters at the same time. The at least one sensor can be used for determining environmental influences on the at least one signal line and/or on the tube associated with the sensor. When comprising at least one sensor connected to the at least one signal line the system may be denoted a sensor system.

The present invention also relates to an umbilical comprising the system and at least one or more strands. In terms of the present invention, an umbilical transfers power, fluids, chemicals, or communication from a base station to a remote station. Preferable an umbilical comprises a plurality of strands made from stainless steel, super-duplex stainless steel, hyper-duplex stainless steel and is used offshore. For example, in the oil drilling industry, an umbilical is used for transferring power, a fluid, chemicals, or information to and from subsea trees, manifolds, jumpers, sleds and controls.

Accordingly, in terms of the present invention, the system can be regarded as being a strand of the umbilical, too, namely a strand used for detecting parameters and/or transferring signals. Apart from the system according to the present invention, the umbilical comprises, as already mentioned above, at least one more strand for the transfer of power, chemicals, communication or the like. In an embodiment, the at least one more strand is a tube for conveying a fluid.

Providing an umbilical having at least one system according to the present invention is beneficial in order to observe the current status of the umbilical. The at least one sensor of the system detects one or more parameters reflecting an environmental influence acting on the first metal tube and/or its at least one signal line, thereby allowing conclusions on the current status of the umbilical and its strands. Once the at least one sensor of the system indicates a deviation from a predefined value in an observed parameter, an operator may be alarmed to replace the umbilical before anything happens. Thus, having a sensor arrangement om am umbilical would be advantageous for determining the conditions of the umbilical.

In an embodiment, multiple sensors are connected to the at least one signal line and are equally spaced along the length of the at least one signal line. By providing multiple sensors equally spaced along the length of the signal line, it is possible to observe the state of the at least one signal line or the respective associated tube along its length. When having long tubes, e.g. tubes having a length of more than 50 meters, such as more than 100 meters, it is beneficial to provide a plurality of sensors equally spaced along the length of the at least one signal line. Since the at least one single line in an embodiment extends along the entire length of the tube, it is possible to observe the current state of the tube at several locations at which the sensors are placed and/or to obtain an average estimation for the overall state of the tube.

According to the present invention, a first metal tube is located inside the cavity of a second tube, wherein the first metal tube comprises a groove in an outer surface thereof, wherein the groove extends in a longitudinal direction of the firstmetal tube, and wherein the at least one signal line and the at least one sensor connected to the at least one signal line are located. Since the first metal tube is located in the cavity of the second metal tube, the groove on the outer surface of the first metal tube faces the second metal tube. Accordingly, the at least one signal line and the at least one sensor accommodated in the groove are located between the first and the second metal tubes. The first and second metal tubes are protecting the at least one signal line and the at least one sensor against environmental influences. The fist metal tube can be used for transferring a fluid without affecting the durability of the at least signal line and the at least one sensor as those are arranged between the first tube and the second tube.

During manufacturing of the system as defined hereinabove or hereinafter, the fist tube is placed on the metal strip or the metal plate for forming the first metal tube. The groove arranged on the outer surface of the second metal tube is easily accessible, such that the at least one signal line and the at least one sensor can be placed in the groove of the second first tube. After the at least one signal line and the at least one sensor have been placed in the groove in the outer surface of the fist metal tube, the metal strip or the metal plate for forming the second tube is bent around the first metal tube. The longitudinal edges of the metal strip or the metal plate are joined together so to form the second metal tube. In the finished system, the second metal tube surrounds the first metal tube. In use of this system, a fluid may be transported through the lumen of the first metal tube, while the signal line between the first and second tubes can be used for transferring a signal along the length of the tubes. In an embodiment, the at least one sensor can be used for collecting certain information on the current state of the system.

In an embodiment, according to the present invention, the outer surface of the first metal tube and eventually of the metal strip/plate for forming the second metal tube comprises a plurality of grooves, wherein in each of the grooves at least one signal line and at least one sensor connected to the respective at least one signal line are arranged. The grooves may form a predetermined, optionally regular, pattern along the outer surface of the respective metal tube, such that the signal lines the sensors are capable of transferring signals along the pattern or are capable of obtaining several measured values along the pattern.

In an embodiment, the first tube and the second tube are concentrically located with respect to each other.

In an embodiment, the at least one sensor is in engagement with a surface of the metal strip or metal plate. The at least one sensor can be in engagement with a surface of the metal strip or metal plate of the second tube or in engagement with a surface of the first metal tube. Being in engagement with a surface of the metal strip or metal plate of the second tube or being in engagement with the surface of the first metal tube enables the at least one sensor to detect at least one physical or chemical parameter exerting on the first or second metal tube

In an embodiment of the invention, the first tube and/or the second tube are manufactured of steel or stainless steel. It shall be understood that generally the material of the first tube and the material of the second tube may be chosen independently from each other, for example from a group consisting of steel, stainless steel, carbon steel, manganese steel, nickel-based alloy, aluminum (Al), Al-based alloy, copper (Cu), Cu-based alloy, zirconium (Zr), Zr-based alloy, titanium (Ti), Ti-based alloy, an iron-chromium-aluminum (FeCrAI) alloy, ferritic steel or any combination thereof. According to the present invention, the method comprises the steps of providing a first metal tube and locating the first metal tube on the metal strip or the metal plate, wherein the metal strip or the metal plate is bent around the firts metal tube such that the first metal tube is placed in the cavity formed by the metal strip or metal plate. Again, the cavity of the second tube is formed around the at least one signal line and the at least one sensor. The at least one signal line and the at least one sensor, are positioned between the first and the second metal tubes and thus protected against environmental influences and/or fluid, which might be transferred through the first metal tube.

In an embodiment, the metal strip or the metal plate is bent around the first tube such that the first tube is in force fit engagement with the second tube. By providing a force fit engagement, the position of the first metal tube relative to the second metal tube, and vice-versa, is fixed.

According to the present invention, the at least one signal line and the at least one sensor are placed such that they extend in a longitudinal direction of the second tube. In an embodiment, the at least one signal line extends over the entire length of the second tube, such that the ends of the at least one signal line protrude over the second tube and is connectable to an external device, such as a transmitter or receiver. Accordingly, the at least one signal line is capable of transferring a signal along the entire length of the second metal tube.

When providing at least one sensor connected to the at least one signal line, the at least one sensor is in engagement with a surface of the metal strip/plate and/or the first tube. Hence, the at least one sensor provides data on the current status of the metal strip and/or the first tube.

In an embodiment, multiple of sensors are connected to the at least one signal line, wherein the sensors are equally spaced along the longitudinal direction of the at least one signal line. The multiple sensors are capable of detecting a certain parameter, e.g. temperature, force, pressure, acceleration, translational and/or rotational movement or the like, along the length of the at least one signal line. Thus, the multiple sensors might be used for determining environmental influences on the second metal tube and thus on the at least one signal line.

In an embodiment, the fist tube is a seamless metal tube manufactured by e.g. drawing, cold-drawing, pilger milling or cold pilger milling. A seamless metal tube does not comprise a longitudinal seam, leading to a strengthened first metal tube.

According to the present invention, a groove is provided in an outer surface of the first metal tube, wherein the groove extends in a longitudinal direction of the first metal tube, and wherein the at least one signal line is placed in the groove. Since the firstmetal tube is arranged in the cavity of the secondmetal tube, the groove in an outer surface of the first metal tube faces an inner surface of the second metal tube. The at least one signal line placed in the groove is protected by both the second metal tube and the first metal tube. Likewise, in an embodiment of the system having at least one sensor connected to the at least one signal line both the at least one signal line and the at least one sensor are placed in the groove in an outer surface of the first metal tube.

In an embodiment, the first metal tube is provided by the steps of
- providing a hollow of metal, and
- drawing the hollow through a drawing die into the first tube, wherein the drawing die has an inner tool surface forming an outer surface of the first metal tube, and wherein the inner tool surface comprises a protrusion projecting inwardly such that a groove is drawn into the outer surface of the first metal tube.

By doing so, the groove of the firstmetal tube is formed in an outer surface of the first metal tube during the drawing step for providing the first metal tube with pre-selected dimensions.

At least one aspect underlying the present invention is also addressed by a method for manufacturing an umbilical comprising the steps of
i) providing a system using the method for manufacturing a system in accordance with the present invention,
ii) providing at least one further strand, and
iii) assembling the at least one further strand and the system together.

Insofar as in the foregoing as well as the following detailed description of the embodiments and claims reference is made to either the system or the method for manufacturing a system, the features described are applicable for both the system and the method for manufacturing the system.

Insofar as in the foregoing as well as the following detailed description of the embodiments and claims reference is made to either the umbilical or the method for manufacturing an umbilical, the features described are applicable for both the umbilical and the method for manufacturing the umbilical as described hereiabove or hereinafter.

According to an embodiment of the present disclosure but not a part of the scope of claims, during manufacturing of a system, the at least one signal line and the at least one sensor are arranged on the metal strip or metal plate before forming the second-metal tube. The at least one signal line and/or the at least one sensor can be loosely laid onto the metal strip/plate or affixed to the metal strip/plate, e.g. the at least one signal line and/or the at least one sensor may be glued onto the metal strip/plate. This will allow a precise arrangement of the at least one signal line and/or the at least one sensor which is very advantageous as sensors, such as for example strain gauges, require very precise arrangement and also gluing for obtaining good operation.

In an embodiment according to the present disclosure but not a part of the scope of claims, the metal strip or metal plate for forming the secondmetal tube comprises a groove in which the at least one signal line and the at least one sensor are located in. Again, the at least one signal line and the at least one sensor can be loosely laid into the groove or affixed in the groove, e.g. the at least one signal line and/or the at least one sensor can be glued into the groove. As mentioned above, this will provide a precise arrangement.

Irrespective of whether the at least one signal line and the at least one sensor are placed on a surface of the metal strip or metal plate or in a groove of the metal strip or metal plate, when joining the longitudinal edges of the metal strip or metal plate together, the at least one signal line and the at least one sensor are placed in the cavity of the second metal tube without any necessity of a further step. By accommodating the at least one signal line together with the at least one sensor connected to the at least one signal line in the cavity formed by the metal strip or metal plate, the second tube protects the at least one signal line and the at least one sensor against environmental influences. In an embodiment but not a part of the scope of the claims, the cavity, in which in the at least one signal line and the at least one sensor are located in is not used or intended to transfer a fluid, such that the at least one signal line and the at least one sensor are not subject of wear caused by the fluid transported through the cavity.

When the at least one signal line and the at least one sensor connected to the at least one signal line are provided in the cavity of the second metal tube, the system in an embodiment but not a part of the scope of the claims is used as a reference system to estimate the actual state of one or more further strands used in the same environment as the reference system. In terms of the present disclosure, a strand is synonymously used for a manifold/pathway/line for transferring power, a fluid, a solid, or a signal.

The present disclosure is also discloses but which is not a part of the scopre of the claims a method for manufacturing a system comprising the steps of
- providing at least one signal line connected to at least one sensor, (step a)
- providing a metal strip or a metal plate having two longitudinal edges extending in a longitudinal direction and two transverse edges connecting the longitudinal edges, (step b)
- forming a first tube with a cavity by joining the longitudinal edges of the metal strip together, (step c) and
- placing the at least one signal line and the at least one sensor in the cavity (step d).

When manufacturing the system according to the present disclosure but which is not a part of the claims, at least one signal line, at least one sensor and a metal strip or a metal plate are provided.

The metal strip or the metal plate has two longitudinal edges extending in a longitudinal direction and two transverse edges connecting the longitudinal edges. The metal strip or the metal plate is formed to a second tube by joining the longitudinal edges of the metal strip or the metal plate together. For instance, the metal strip or the metal plate can be formed to a tube by roll forming, wherein the longitudinal edges are welded together. The at least one signal line and the at least one sensor are placed in the cavity of the second tube. The method can be referenced as being a method for manufacturing a signal transmission system.

In an embodiment but not a part of the scope of the claims, the forming of the second tube comprises a welding process and/or a roll forming process. For instance, the metal strip or metal plate can be first roll formed so to bring the longitudinal edges of the first metal tube together. Afterwards, the longitudinal edges can be welded together, thereby preserving the shape of the second metal tube.

The present disclosure also discloses but which is not a part of the scope of the claims a method for manufacturing a sensor system comprising the steps of:
- providing at least one sensor and at least one signal line connected to the sensor (step a);
- providing a metal strip or a metal plate having two longitudinal edges extending in a longitudinal direction and two transverse edges connecting the longitudinal edges (step b);
- forming a cavity by joining the longitudinal edges of the metal strip or metal plate together (step c); and
- placing the at least one sensor and the at least one signal line in the cavity (step d).

It shall be understood that in terms of the present disclosure, the steps "forming a cavity by joining the longitudinal edges of the metal strip or metal plate together" (step c) and "placing the at least one sensor and the at least one signal line in the cavity" (step d) are regarded to be supplementary steps not necessarily following each other in the given order. In fact, the second tube is formed such that the at least one signal line and the at least one sensor are placed in the cavity of the second tube by placing the signal line and the at least one sensor relative to the metal strip or metal plate for forming the second tube and by joining the longitudinal edges of the metal strip/plate together.

In an embodiment but not a part of the scope of the claims, the at least one signal line and the at least one sensor are placed on the metal strip/plate before forming the second tube. When joining the longitudinal edges of the metal strip or metal plate together, the cavity of the second metal tube is formed around the signal line and the at least one sensor. By placing the at least one signal line and the at least one sensor on the metal strip or the metal plate before joining the longitudinal edges together there is no need for providing a first metal tube to be surrounded by the second tube. Additionally, according to one embodiment which is not a part of the scope of the claims, the sensors may be arranged to monitor the second ube on which they are mounted. Placing the at least one signal line and the at least one sensor on a surface of the metal strip or the metal plate before forming the second tube is easier than introducing the at least one signal line and the at least sensor into the cavity of the second tube after it has been formed. This in particular applies to tubes exceeding a certain length, i.e. tubes longer than 50 meter, such as 100 meters, for which it is impossible to arrange a sensor into its cavity after the tube has been formed.

In an embodiment which is not a part of the scope of the claims, the at least one signal line and the at least one sensor connected to the signal line are fixed on the surface of the metal strip or the metal plate. For instance, the at least one signal line and/or the at least one sensor can be glued to the surface of the metal strip or the metal plate.

The present disclosure also describes ,a method which is not a part of the scope of the claims including a step of providing a groove in a surface of the metal strip or the metal plate and wherein in step the at least one signal line and the at least one sensor are placed in the groove. Forming a groove in a surface of the metal strip or the metal plate and placing the at least one signal line and the at least one sensor in the groove is beneficial for both protecting and positioning of the at least one signal line and/or the at least one sensor. For example, the groove can be worked into the metal strip or the metal plate by chip removing machining chosen from a group consisting of milling, drilling, and filing or any combination thereof. In an embodiment, when placed in the groove of the metal strip or the metal plate the at least one signal line and/or the at least one sensor do not protrude beyond the groove in a radial direction of the tube. The at least one signal line and/or the at least one sensor are protected by the groove. Additionally, the groove defines a pre-selected position in the surface of the metal strip or metal plate, such that when placing the at least one signal line and/or the at least one sensor in the groove, the at least one signal line and/or the at least one sensor have a well-defined position, too.

Further advantages, features and applications of the present disclosure will become apparent from the following description of embodiments and the corresponding figures attached. The foregoing as well as the following detailed description of the embodiments will be better understood when read in conjunction with the appended drawings. It should be understood that the embodiments depicted are not limited to the precise arrangements and instrumentalities shown.

### BRIEF DECSRIPTION OF THE FIGURES

- Figure 1: is a schematic perspective view of a metal strip or a metal plate used for forming a sensor system according to an embodiment of the present disclosure which is not a part of the scope of the claims indicating steps a) and b) of a method for manufacturing the sensor system according to an embodiment of the present disclosure.
- Figure 2: is a schematic perspective view of a sensor system according to an embodiment of the present disclosure which is not a part of the scope of the claims also indicating steps c) and d) of a method for manufacturing the sensor system according to an embodiment of the present disclosure.
- Figure 3: is a schematic perspective view of a sensor system according to an embodiment of the present invention also indicating steps a) to d) of a method for manufacturing the sensor system according to an embodiment of the present invention.

### DETAILED DESCRIPTION

In the figures, identical elements are denoted by identical reference numerals.

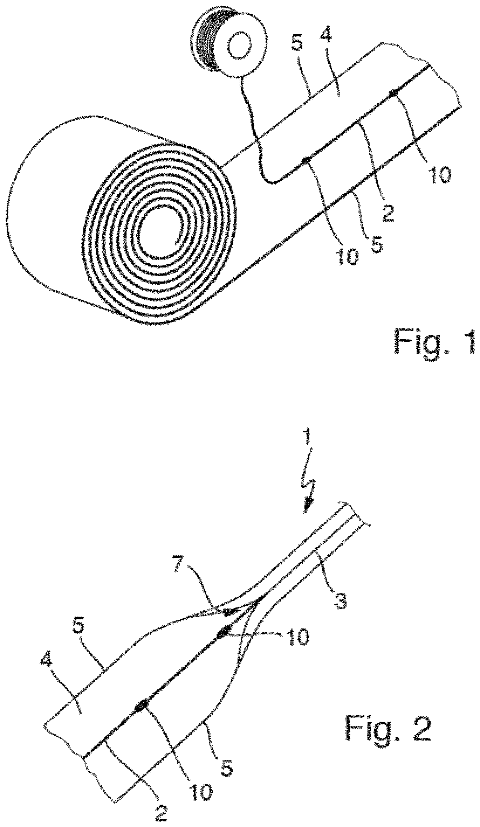

Figure 1 shows a schematic perspective view of a metal strip 4 used for forming a sensor system 1 according to an embodiment of the present disclosure which is not a part of the scope of the claims also indicating steps a) and b) of the method which is not a part of the scope of the claims for manufacturing such a sensor system 1.

In accordance with step a) of the method for manufacturing a sensor system, multiple sensors 10 are provided together with a signal line 2. The sensors 10 are connected to the signal line 2 and are equally spaced along the length of the signal line 2.

In accordance with step b) of the method for manufacturing a sensor system 1, a metal strip 4 having two longitudinal edges 5 and two transverse edges 6 (not shown) is provided. The metal strip 4 is provided as a coiled strip 4 to manufacture a sensor system having a tube length of more than 100 meters.

After uncoiling the metal strip 4, the signal line 2 and the sensors 10 are aligned with the longitudinal edges 5 of the metal strip 4. The signal line 2 and the sensors 10 are affixed to the surface of the metal strip 4 by gluing, such that the sensors 10 are in engagement with the metal strip 4 and having a fixed positional relationship relative to the metal strip 4. Each of the sensors 10 is a combined acceleration sensor and force sensor capable for sensing movement of the metal strip 4 and force exerted on the metal strip. The sensors 10 are each connected to two copper wire together forming the signal line 2.

Figure 2 indicates steps c) and d) of the method which is not a part of the scope of the claims for manufacturing the system 1 according to an embodiment which is not a part of the scope of the claims of the present disclosure resulting in a system 1 according to an embodiment of the present disclosure.

By roll forming the longitudinal edges 5 of the metal strip 4 are bend towards each other thereby forming a tube 3 comprising a cavity 7. The longitudinal edges 5 are welded together thereby preserving the shape of the tube 3. Since the sensors 10 and the signal line 2 have been placed on the metal strip, when joining the longitudinal edges 5 of the metal strip 4 together so to form a cavity 7, the sensors 10 and the signal line 2 are located in the cavity 7.

At the end, the sensor system 1 comprises a metal tube 3 protecting the sensors 10 and the signal line 2 against environmental influences.

The signal line 2 extends in the longitudinal direction of the metal tube 3, wherein the ends of the signal line 2 protrude over the metal tube 3, such that the signal line 2 is connectable to a receiver (not shown).

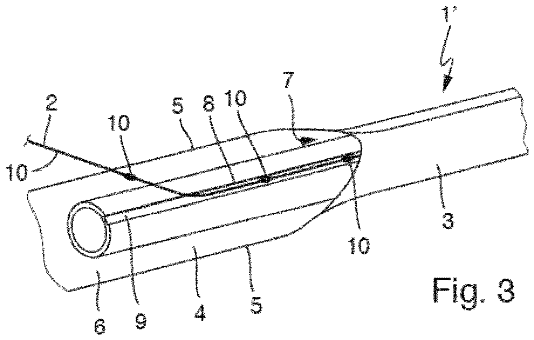

Figure 3 is perspective view of a sensor system 1' according to a embodiment of the present invention also indicating the steps a) to d) of a corresponding method for manufacturing the sensor system 1'.

In step a) a signal line 2 and sensors 10 are provided. The sensors 10 are connected to the signal line 2 and are equally spaced along the length of the signal line 2. The sensors 10 are pressure sensors so to determine a pressure exerting on the system 1'.

Next, a metal strip 4 comprising two longitudinal edges 5 and two transverse edges 6 is provided. The latter connecting the longitudinal edges 5, wherein only one transverse edge 6 is shown in figure 3.

A fist metal tube 8 is placed on a surface of the metal strip 4. The first metal tube 8 is a seamless tube provided by cold drawing of a hollow through a drawing die (not shown). The drawing die has an inner tool forming an outer surface of the fist metal tube 8, and wherein the inner tool surface comprises a protrusion projecting inwardly such that a groove 9 is drawn into the outer surface of the first metal tube 8.

The groove 9 extends in a longitudinal direction of the first metal tube 8. In a subsequent step the signal line 2 and multiple sensors 10 are placed in the groove 9.

After the signal line 2 and the sensors 10 have been placed in the groove 9, the metal strip 4 is bent to a second tube 3 by roll forming. After roll forming the second tube 3 surrounds the first metal tube 8. The first metal tube 8 is thereby placed inside the cavity 7 formed by the second tube 3. The second tube 3 and the first tube 8 are in force fit engagement with each other. The longitudinal edges 5 of the metal strip 4 are welded together, thereby preserving the shape of the second metal tube 3.

Since the first metal tube 8 is placed in the cavity 7, the groove 9 faces an inner surface of the second metal tube 3, such that the signal line 2 and the sensors 10 are arranged between the second tube 3 and the first tube 8. The at least one signal line 2 placed in the groove 9 as well as the sensors 10 are protected by both, the second metal tube 3 and the first metal tube 8.

For purposes of original disclosure, it is pointed out that all features which are apparent for a person skilled in the art from the present description, the figures and the claims, even if they have only been described with further features, could be combined on their own or together with all the combinations of the features disclosed herein, if not excluded explicitly or technically impossible. A comprehensive explicit description of all possible combinations of features is only omitted in order to provide readability of the description.

While the disclosure has been described with respect to a limited number of embodiments, it will be understood that the disclosure of which is not limited to those embodiments. In particular, the description of preferred embodiments shall not be understood to be limited to what is explicitly shown and described in the specification and drawings but shall encompasses the disclosure of the specification and drawings as a whole, within the scope of the appended claims.

### List of reference numerals

- 1,1': system
- 2: signal line
- 3: second tube
- 4: metal strip
- 5: longitudinal edge of metal strip 4
- 6: transverse edge of metal strip 4
- 7: cavity
- 8: first tube
- 9: groove
- 10: sensor

## Claims

1. A method for manufacturing a system (1, 1') comprising the steps of
a) providing at least one signal line (2) connected to at least one sensor,
b) providing a metal strip (4) or a metal plate having two longitudinal edges (5) extending in a longitudinal direction and two transverse edges (6) connecting the longitudinal edges (5); providing a first metal tube (8) having a groove (9) provided in an outer surface of the first metal tube (8), wherein the groove (9) extends in a longitudinal direction of the first metal tube (8); and locating the first metal tube (8) on the metal strip (4) or the metal plate,
c) placing the at least one signal line (2) with the at least one sensor (10) connected to the signal line (2) in the groove (9); and forming a second tube (3) with a cavity (7) by joining the longitudinal edges (5) of the metal strip (4) or metal plate together, wherein
d) bending the metal strip (4) or the metal plate around the first metal tube (8) results in the first metal tube (8), the at least one signal line (2) and the at least one sensor being placed in the cavity (7) formed by the metal strip (4) or the metal plate.

2. The method according to claim 1, wherein step c) comprises a welding process.

3. The method according to anyone of claims 1 to 2, wherein step c) comprises a roll forming process.

4. A method for manufacturing an umbilical comprising the steps of
i) providing a system (1, 1') using the method according to anyone of claims 1 to 3,
ii) providing at least one further strand, and
iii) assembling the system (1, 1') and the at least one further strand together.

5. The method according to claim 4, wherein the at least one further strand is a metal tube for conveying a fluid.

## Patentansprüche

1. Verfahren zur Herstellung eines Systems (1,1'), folgende Schritte umfassend:
a) Bereitstellen zumindest einer Signalleitung (2), die mit zumindest einem Sensor verbunden ist,
b) Bereitstellen eines Metallbands (4) oder einer Metallplatte mit zwei Längskanten (5), die sich in einer Längsrichtung erstrecken, und zwei Querkanten (6), die die Längskanten (5) verbinden; Bereitstellen eines erstes Metallrohrs (8) mit einer Nut (9), die in einer Außenfläche des ersten Metallrohrs (8) vorgesehen ist, wobei sich die Nut (9) in einer Längsrichtung des ersten Metallrohrs (8) erstreckt; und Anordnen des ersten Metallrohrs (8) auf dem Metallband (4) oder der Metallplatte,
c) Anordnen der zumindest einen Signalleitung (2) mit dem zumindest einen Sensor (10), der mit der Signalleitung (2) verbunden ist, in der Nut (9); und Bilden eines zweiten Rohrs (3) mit einem Hohlraum (7) durch Miteinanderverbinden der Längskanten (5) des Metallbands (4) oder der Metallplatte, wobei
d) durch das Biegen des Metallbands (4) oder der Metallplatte um das erste Metallrohr (8) das erste Metallrohr (8) entsteht, wobei die zumindest eine Signalleitung (2) und der zumindest eine Sensor in dem durch das Metallband (4) oder die Metallplatte gebildeten Hohlraum (7) angeordnet sind.

2. Verfahren nach Anspruch 1, wobei Schritt c) einen Schweißprozess umfasst.

3. Verfahren nach einem der Ansprüche 1 bis 2, wobei Schritt c) einen Walzprofilierprozess umfasst.

4. Verfahren zur Herstellung einer Versorgungsleitung, folgende Schritte umfassend:
i) Bereitstellen eines Systems (1, 1') unter Verwendung des Verfahrens nach einem der Ansprüche 1 bis 3,
ii) Bereitstellen zumindest eines weiteren Strangs, und
iii) Zusammenbauen des Systems (1, 1') und des zumindest einen weiteren Strangs.

5. Verfahren nach Anspruch 4, wobei der zumindest eine weitere Strang ein Metallrohr zum Befördern eines Fluids ist.

## Revendications

1. Procédé de fabrication d'un système (1,1') comprenant les étapes consistant à
a) fournir au moins une ligne de signal (2) connectée à au moins un capteur,
b) fournir une bande métallique (4) ou une plaque métallique ayant deux bords longitudinaux (5) s'étendant dans une direction longitudinale et deux bords transversaux (6) connectant les bords longitudinaux (5) ; fournir un premier tube métallique (8) ayant une rainure (9) fournie dans une surface externe du premier tube métallique (8), dans lequel la rainure (9) s'étend dans une direction longitudinale du premier tube métallique (8) ; et placer le premier tube métallique (8) sur la bande métallique (4) ou la plaque métallique,
c) mettre en place au moins une ligne de signal (2) avec au moins un capteur (10) connecté à la ligne de signal (2) dans la rainure (9) ; et former un second tube (3) avec une cavité (7) en joignant les bords longitudinaux (5) de la bande métallique (4) ou la plaque métallique ensemble, dans lequel
d) plier la bande métallique (4) ou la plaque métallique autour du premier tube métallique (8) entraîne le placement du premier tube métallique (8), de l'au moins une ligne de signal (2) et de l'au moins un capteur dans la cavité (7) formée par la bande métallique (4) ou la plaque métallique.

2. Procédé selon la revendication 1, dans lequel l'étape c) comprend un procédé de soudage.

3. Procédé selon l'une quelconque des revendications 1 à 2, dans lequel l'étape c) comprend un processus de formage aux galets.

4. Procédé de fabrication d'un câble ombilical comprenant les étapes consistant à
i) fournir un système (1, 1') à l'aide du procédé selon l'une quelconque des revendications 1 à 3,
ii) fournir au moins un brin supplémentaire, et
iii) assembler le système (1, 1') et l'au moins un brin supplémentaire ensemble.

5. Procédé selon la revendication 4, dans lequel l'au moins un brin supplémentaire est un tube métallique pour acheminer un fluide.
